# EUROPEAN PATENT SPECIFICATION

(11) **EP 2 317 686 B1**
(45) Date of publication and mention of the grant of the patent: **30.08.2017**
(21) Application number: 09360047.6
(22) Date of filing: 28.10.2009
(51) Int. Cl.: H04L 5/00, H04W 72/08

(54) **METHOD AND APPARATUS FOR REQUESTING AND ALLOCATING NETWORK RESOURCE**
VERFAHREN UND VORRICHTUNG ZUR ANFORDERUNG UND ZUWEISUNG EINER NETZWERKRESSOURCE
PROCÉDÉ ET APPAREIL POUR DEMANDER ET ATTRIBUER DES RESSOURCES DE RÉSEAU

(43) Date of publication of application: 04.05.2011
(73) Proprietor: ALCATEL LUCENT, 92100 Boulogne-Billancourt (FR)
(72) Inventor: Palat, Sudeep K., Swindon Wiltshire SN5 6EE (GB); Baker, Matthew, Canterbury Kent CT2 9DB (GB); Lim, Seau S., Swindon Wiltshire SN1 4GU (GB)
(74) Representative: Berthier, Karine

(56) References cited:
- EP-A1- 1 482 710
- EP-A1- 2 066 141
- EP-A1- 2 068 505
- EP-A2- 1 763 191
- WO-A1-2008/096647
- WO-A1-2009/026739
- WO-A1-2009/093944
- US-A1- 2008 153 506

## Description

### FIELD OF THE INVENTION

The present invention relates to a method of requesting network resource in a multiple component carrier wireless telecommunications network, a method of allocating network resource in a multiple component carrier wireless telecommunications network, a network node, base station, user equipment and computer program product operable to carry out that method.

### BACKGROUND

Single carrier wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In known single carrier wireless telecommunication systems, user equipment can move between geographical base station coverage areas. A Mobility Management Entity (MME) acts as a key control node. It is responsible for authenticating user equipment, and also operates to select a serving gateway for user equipment when an item of user equipment initially 'attaches' to the communications network and to re-select a serving gateway at the time of handover between base stations.

The area served by a given base station typically comprises several sectors which together define a coverage area for that base station. Typically a base station serves three sectors. Those sectors are typically served by separate antenna arrays provided on the base station.

Movement between sectors provided by a single base station and movement between coverage areas, that is to say movement between base stations are known as "mobility events" or "handover" and are overseen by the MME.

From a user's perspective, user equipment may be in an essentially "inactive" state, i.e. not sending or receiving voice, video or other data. In the event that the user equipment has data, for example, user data relating to voice, video or other services, or signalling data, to send to the network, user equipment notifies the base station to which it is attached that it has data to send. In response, once the base station has received such a notification, the base station transmits an indication of network resource allocated to that user equipment for transmission of the user data or signalling data to the base station.

In a typical single carrier network, the initial notification sent from the user equipment to the base station is known as a "scheduling request" and typically comprises a single bit. Since the user equipment communicates with the base station on only a single uplink carrier, the scheduling request is sent on that uplink carrier.

Once the scheduling request is received, the base station becomes aware that the user equipment has data to send to the network. The base station allocates network resource to the user equipment. That allocation is communicated to the user equipment on the available single downlink carrier to the relevant user equipment. The allocation will be an allocation of network resource to transmit data to the base station on the single uplink carrier on which that user equipment communicates with the base station. The message communicating the allocation is often known as a 'grant'.

It is proposed to allow base stations and user equipment to each transmit simultaneously on more than one carrier. Furthermore, it is proposed to allow user equipment and base stations to receive simultaneously on more than one carrier frequency. Each carrier, both uplink and downlink, is typically independently power controlled and independently scheduled by a base station. Such networks are known as "multiple component carrier" networks. Multiple component carrier networks may substantially improve end user data throughput.

In a multiple component carrier network, multiple component carriers may be configured for communication between a base station and user equipment on both downlink and/or uplink. Typically any of the downlink component carriers may be used to carry signalling messages comprising uplink transmission resource grants which permit the user equipment to transmit user data on the available uplink component carriers. An uplink grant of network resource sent on a particular downlink component carrier may assign uplink network resources on one specific uplink component carrier according to a default or predetermined correspondence between uplink and downlink component carriers. Alternatively, any given downlink component carrier may assign uplink network resources on any uplink component carrier by means of a component carrier indicator included in the resource allocation message sent from the base station to the user equipment allocating network resource.

In the event that user equipment in a multiple component carrier network requires to send data to the network, it is operable to send a scheduling request, as in a single carrier network. The user equipment may send that scheduling request on any one or more of the uplink carriers on which it is configured to transmit. If user equipment is allocated multiple component carriers in a multiple component carrier wireless telecommunications network, it will be understood that it is possible that a radio link failure may occur in one or more of the uplink or downlink component carriers. The base station may not be aware of any radio link failure in any one of the downlink component carriers. When the base station receives a scheduling request from the user equipment it may allocate uplink resources to the user equipment using any of the available component carriers including the failed component carrier. In the event that the base station allocates uplink resources using the failed downlink component carrier the user equipment does not become aware that it has been allocated network resource and consequently cannot communicate with the network.

In such a situation, alternative carriers may not be experiencing radio link failure and could be sensibly utilised by the user equipment and base station. If the user equipment and base station are unaware that other carriers are available for successful communication, the user equipment may be forced to request radio link re-establishment despite the fact that it is already synchronised and attached to a base station on existing carriers. In the event that radio link failure is declared the user equipment may re-connect to the network via a different carrier to regain data throughput. That re-connection process takes time. WO 2008/096647 and family member EP 2 120 378 describes an uplink scheduling method in which a communication control apparatus estimates propagation channel quality the individual uplink channel of each mobile station using an uplink channel for channel quality indicator (CQI) measurement, and the calculated uplink CQI information is used by a scheduling unit, mapped onto a downlink shared control signalling channel and transmitted to an appropriate mobile station.

US 2008/0153506 describes channel quality information feedback techniques for a wireless communication system. Described embodiments use channel quality information feedback at a base station and consider how to efficiently communicate CQI from user equipment for scheduling purposes while taking into account limitations of available bandwidth.

WO 2009/026739, EP 2068 505, EP 1 763 191, EP 1 482 710 and EP 2066 141 describe existing scheduling resource allocation methods for single carrier and multiple component carrier networks.

It is desired to improve the resilience of a multiple component carrier wireless telecommunications network in the event of partial radio link failure.

### SUMMARY

Accordingly, a first aspect provides a method of requesting network resource in a multiple component carrier wireless telecommunications network, said multiple component carrier wireless telecommunications network comprising a network node and user equipment, each operable to simultaneously transmit and receive signals on more than one radio frequency carrier within a geographical region of said telecommunications network, said method comprising the steps of:
receiving, at the user equipment, an indication that there is data to be sent to a network node;
determining, at the user equipment, a set of available radio frequency carriers on which data may be transmitted to said network node; said step of determining a set of available radio frequency carriers on which data may be transmitted to said network node comprising the steps of:
   monitoring, at the user equipment, a measurable characteristic indicative of radio propagation characteristics or failure of each radio frequency carrier on which data may be received from said network node;
   determining, at the user equipment, which of those radio frequency carriers on which data may be received from said network node has a measurable characteristic indicative of radio propagation characteristics or failure past a predetermined threshold value;
   correlating, at the user equipment, those radio frequency carriers on which data may be received from said network node determined to have said measurable characteristic past said predetermined threshold value with a corresponding radio frequency carrier on which data may be transmitted to said network node, and allocating those correlated radio frequency carriers on which data may be transmitted to said network node to said set of available radio frequency carriers; and requesting network resource by transmitting to said network node an indication that there is data to be sent to said network node on a carrier from the set of determined available carriers.

It will be understood that "radio frequency carriers on which data may be transmitted to the network node" may also be referred to throughout as "uplink" component carriers. Furthermore, it should be understood that "radio frequency carriers on which data may be received from the network node" may also be referred to as "downlink" component carriers. The indication that there is data to be sent to the network node may also be referred to as a "scheduling request".

The first aspect recognises that by determining a set of available radio frequency carriers on which data may be transmitted to the network node, for example, a base station, the user equipment may increase the chances that a scheduling request may be received by that network node. The user equipment can determine which set of uplink carriers may be considered to be "available". The criteria used to determine availability may differ and some options are set out in more detail in the following exemplary embodiments.

The first aspect further recognises that the set of "available" uplink carriers may not directly correspond to the set of uplink carriers on which the user equipment is configured to transmit to a base station on. User equipment is capable of determining the reception status of downlink carriers received (or otherwise) by the user equipment. It is often the case that uplink and downlink carriers are typically provided in corresponding pairs, consequently, if user equipment is in a position to determine whether or not is it is receiving information from a particular downlink carrier, it may therefore be able to ascertain or determine whether or not it is sensible to transmit a scheduling request on the corresponding uplink carrier. According to the first aspect, the request for network resource, may be transmitted on only one of the carriers from the set of determined "available" carriers or may be transmitted on all of the carriers included in the set of available carriers.

Although various criteria may be set out to determine the set of 'available' carriers from the set of configured carriers, the mapping therebetween may, as a result of applying the criteria for 'available', remain one to one. That is to say, the set of available may be equal to the set of configured carriers.

It will be appreciated that uplink and downlink carriers may not be provided in simple pairs and that the correlation may be uneven, for example, one downlink may correlate to two uplink carriers. Some correlation however, between downlink and uplink is provided.

The first aspect recognises that it is possible to monitor a measurable characteristic of each radio frequency carrier on which data may be received form the network node, for example, the status of various downlink carriers received by user equipment. Since uplink and downlink carriers may be provided in correlating pairs and the radio condition experienced by those pairs may be similar, it is possible to assume in a method according to this embodiment, that if a downlink carrier is failing or is experiencing disadvantageous radio propagation characteristics, that the correlating uplink carrier is likely also to be experiencing disadvantageous propagation characteristics and that any data sent from user equipment to the base station on that uplink carrier is unlikely to reach the base station. By performing an assessment of the status of the downlink carriers it is therefore possible to select a set of "available" uplink carriers which are most likely to be received at the base station.

This embodiment recognises that if a measurable characteristic, for example, signal to noise and interference ratio or simply signal strength, of a received downlink carrier at the user equipment does not meet a certain threshold then it is unlikely that data sent on corresponding uplink channels will be received by the base station. Therefore it is possible by considering that relationship is determining 'available' carriers, for user equipment to send a scheduling request on only those uplink carriers on which it believes it is probable that subsequent full data transmission will be successful.

In one embodiment, the step of requesting network resource by transmitting an indication that there is data to be sent to the network node, further comprises the steps of:
i) calculating which of those radio frequency carriers on which data may be received from the network node has a measurable characteristic past a predetermined threshold value by the greatest amount;
ii) correlating the radio frequency carrier on which data may be received from the network node determined to have a measurable characteristic past the predetermined threshold value by the greatest amount with a corresponding radio frequency carrier on which data may be transmitted to the network node, and transmitting the indication to the network node on that carrier. The feature of this embodiment may be combined with any one or more features described in other embodiments in relation to this aspect.

This embodiment recognises that it is possible for user equipment to select, based on the measured characteristic of downlink carriers received by user equipment, the uplink carrier likely to be experiencing the most advantageous radio propagation environment. It is possible for the user equipment to therefore select only the "best" uplink carrier on which to request network resource to send data to the base station.

In one embodiment, the step of requesting network resource comprises the step of transmitting an indication that there is data to be sent to the network node on each carrier in the set of determined available carriers. The feature of this embodiment may be combined with any one or more features described in other embodiments in relation to this aspect.

This embodiment recognises that by sending an indication that there is data to be sent, namely a scheduling request, to a base station on each of the uplink carrier determined to be in the set of available uplink carriers it is thereby possible to maximise the chance that the scheduling request will be received and that the base station will have a full view of uplink carriers on which data can be successfully sent. This approach may increase the chance of utilising the multiple component uplink carrier ability of a multiple component carrier telecommunications network.

It may be that the base station is suitably configured to ensure that, for each uplink carrier on which a scheduling request is received, it is capable of allocating network resource. In this way, the total data uplink capability of user equipment may be maximised. Furthermore, since more than one uplink carrier may be available, the overall flexibility and throughput across the network as a whole may be optimised.

In one embodiment, the indication that there is data to be sent to the network node comprises an indication of those radio frequency carriers on which data may be transmitted to the network node determined to be in the set of available carriers. The feature of this embodiment may be combined with any one or more features described in other embodiments in relation to this aspect.

This embodiment recognises that rather than sending a scheduling request as a single bit on a single carrier it may be possible to encode information relating to all available carriers into a single, modified, scheduling request and transmit that modified scheduling request on only one carrier. The modified scheduling request may comprise a series of bits, one for each configured carriers. It may, of course, be possible to send such a modified scheduling request containing data relating to all available uplink carriers on all available uplink carriers. This embodiment may ensure that a full scheduling request relating to the total status of carriers for any given user equipment is more likely to reach a base station and that network resource is more efficiently allocated as a result.

In one embodiment, the step of requesting network resource further comprises the steps of:
monitoring for a response to the request for network resource;
if no response is detected within a first predetermined time period, re-requesting network resource by re-transmitting the indication that there is data to be sent to the network node on a carrier from the set of determined available carriers. The feature of this embodiment may be combined with any one or more features described in other embodiments in relation to this aspect.

Such an embodiment recognises that by monitoring for a response to the request for network resource, that is to say by monitoring for receipt of a grant on a downlink carrier, the user equipment may be in a position to retransmit an indication that there is data to be sent rather than simply assuming complete radio link failure and therefore initiating a radio link re-establishment procedure. By re-transmitting the scheduling request the multiple component carrier network is given a second chance to utilise various carriers available and various links available between user equipment and the base station.

In one embodiment, the re-transmission occurs on the same carrier as the original transmission. In one embodiment re-transmission occurs on a different available carrier to the one on which the original transmission was made. The feature of this embodiment may be combined with any one or more features described in other embodiments in relation to this aspect.

In one embodiment, the re-transmission may occur on the same carrier as the original transmission, and alternatively it may occur on a different available uplink carrier to the one on which the original transmission was made. The feature of this embodiment may be combined with any one or more features described in other embodiments in relation to this aspect.

Such arrangements recognise that the chance of successfully transmitting a scheduling request to a base station and subsequently receiving an appropriate grant from a base station may depend on appropriate choice of uplink carrier on which to make a re-transmission. If, for example, the downlink corresponding to the original uplink transmission has, in the meantime failed, it may be advantageous to send a scheduling request on a different available uplink carrier.

In one embodiment, after a predetermined number of re-transmissions the method further comprises the step of initiating a radio link re-establishment procedure by transmitting a request for radio link re-establishment on a radio frequency carrier on which data may be transmitted to a network node. The feature of this embodiment may be combined with any one or more features described in other embodiments in relation to this aspect.

Accordingly, if no response is received to the scheduling request after a predetermined amount of time or a predetermined number of repetitions, the user equipment may be forced to request radio link re-establishment. By suitable choice of a predetermined time period or number of repetitions, a radio link re-establishment procedure may only be initiated when deemed necessary and not solely in the event that a single downlink or uplink carrier in the multiple component carrier system has failed.

It will be understood that the various methods for determining which uplink carriers may be deemed to be in the "available" set may be combined. Furthermore, the various methods of transmitting a scheduling request to a network node (base station) may be combined such that a balance of relative advantages and disadvantages of the various approaches outlined above may be balanced.

A second aspect provides a computer program product operable, when executed on a computer, to perform the method of the first aspect.

A third aspect provides user equipment operable to request network resource in a multiple component carrier wireless telecommunications network, said multiple component carrier wireless telecommunications network comprising a network node and user equipment, each operable to simultaneously transmit and receive signals on more than one radio frequency carrier within a sector of said telecommunications network, said user equipment comprising:
data reception logic operable to receive an indication that there is data to be sent to a network node;
uplink carrier determination logic operable to determine a set of available radio frequency carriers on which data may be transmitted to said network node monitoring logic, operable to monitoring a measurable characteristic of each radio frequency carrier on which data may be received from the network node;
determination logic, operable to determine which of those radio frequency carriers on which data may be received from said network node has a measurable characteristic past a predetermined threshold value;
correlation logic, operable to correlate those radio frequency carriers on which data may be received from the network node determined to have a measurable characteristic past said predetermined threshold value with a corresponding radio frequency carrier on which data may be transmitted to the network node, and allocation logic, operable to allocate those correlated radio frequency carriers on which data may be transmitted to the network node to the set of available radio frequency carriers; and
scheduling request logic operable to request network resource by transmitting to said network node an indication that there is data to be sent to said network node on a carrier from the set of determined available carriers.

In one embodiment, the scheduling request logic further comprises:
calculation logic operable to calculate which of those radio frequency carriers on which data may be received from the network node has a measurable characteristic past a predetermined threshold value by the greatest amount; and
correlation logic operable to correlate the radio frequency carrier on which data may be received from the network node determined to have a measurable characteristic past the predetermined threshold value by the greatest amount with a corresponding radio frequency carrier on which data may be transmitted to the network node, and transmit said indication to said network node on that carrier. The feature of this embodiment may be combined with any one or more features described in other embodiments in relation to this aspect.

In one embodiment, the user equipment is further operable to transmit an indication that there is data to be sent to the network node on each carrier in the set of determined available carriers. The feature of this embodiment may be combined with any one or more features described in other embodiments in relation to this aspect.

In one embodiment, the indication that there is data to be sent to the network node comprises an indication of those radio frequency carriers on which data may be transmitted to the network node determined to be in the set of available carriers. The feature of this embodiment may be combined with any one or more features described in other embodiments in relation to this aspect.

In one embodiment, the user equipment further comprises
grant monitoring logic operable to monitor for a response to the request for network resource; and
request logic operable, if no response is detected within a first predetermined time period, to re-request network resource by re-transmitting said indication that there is data to be sent to the network node on a carrier from the set of determined available carriers. The feature of this embodiment may be combined with any one or more features described in other embodiments in relation to this aspect.

In one embodiment, the re-request logic is operable to instruct re-transmission on the same carrier as the original transmission. The feature of this embodiment may be combined with any one or more features described in other embodiments in relation to this aspect.

In one embodiment, the re-request logic is operable to instruct re-transmission on a different available carrier to the one on which the original transmission was made. The feature of this embodiment may be combined with any one or more features described in other embodiments in relation to this aspect.

In one embodiment, the user equipment further comprises radio link reestablishment logic operable to initiate a radio link re-establishment procedure by transmitting a request for radio link re-establishment on a radio frequency carrier on which data may be transmitted to a network node, after a predetermined number of re-transmissions.

### BRIEF DESCRIPTION OF THE DRAWINGS

Embodiments of the present invention will now be described further, with reference to the accompanying drawings in which:
Figure 1 illustrates the main components of a telecommunications network according to one embodiment;
Figure 2 illustrates components of user equipment for use in the telecommunications network of Figure 1 ;
Figure 3 illustrates components of a network node for use in the telecommunications network of Figure 1;
Figure 4 illustrates the main processing steps of user equipment and a network node for use in the telecommunications network of Figure 1; and
Figures 5 to 9 are a schematic illustrations of possible scenarios using methods in accordance with various embodiments.

### DESCRIPTION OF THE EMBODIMENTS

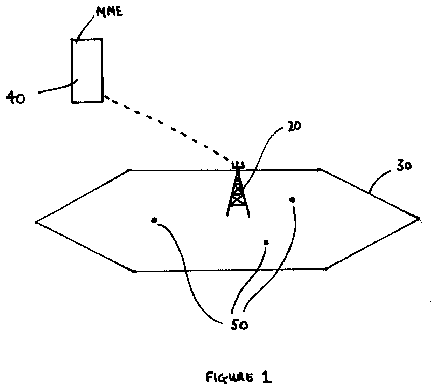

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by Mobility Management Entity (MME). The MME 40 controls operation of the wireless communications system by communicating with a plurality of base stations. The MME also communicates with user equipment 50 via each base station and thus effectively manages the wireless communications system.

In a multiple component-carrier system, each sector served by a base station can have several carrier frequencies or "carriers" associated therewith. A carrier or cell supported by a carrier covers the same geographical region as a sector. Each cell is served by a different carrier frequency. It will therefore be understood that in a single carrier system, a cell is equivalent to a sector since a sector has only one cell or carrier frequency. Nonetheless, in a multi-carrier network each sector may comprise several cells each cell being served simultaneously by a different carrier frequency.

40 maintains location information which provides information on the location of user equipment 50 within the wireless communication system 10. The radio network controller is operable to route data traffic through the telecommunications network.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

A radio link is a dedicated connection between user equipment 50 and a cell of a base station. These dedicated radio links are formed when user equipment is in a "RRC-Connected" state. When user equipment is not transmitting information such as text messages or voice information to a base station it is in a so-called "RRC-idle" state. When user equipment has information to transmit to a base station it chooses a connected state within which to operate. When in a "RRC-Connected" state user equipment is able to use high speed uplink packet access radio resources to achieve a high uplink throughput.

User equipment has uplink and downlink radio links. When a downlink (a connection between a base station and user equipment) radio link failure occurs user equipment may declare a radio link failure and move away from a "RRC-Connected" state. More particularly, it may move away from a state in which it has the ability to operate in high speed uplink packet access mode. In a multiple component carrier system, each carrier has independent downlink radio links from a base station to user equipment. Those downlink radio links are managed independently since each carrier will likely have different radio propagation paths to user equipment.

In a multiple component carrier system, multiple component carriers may be configured for communication between a base station and user equipment, that is to say there maybe multiple downlink component carriers. Furthermore, multiple component carriers may be configured for communication between user equipment and a base station, that is to say, a plurality of uplink component carriers may be provided. Any of the provided downlink component carriers may be used to carry signalling messages to the user equipment 50. Those signalling messages may comprise uplink transmission resource grants allowing or permitting the user equipment to transmit uplink data on any available uplink component carrier. An uplink grant sent on one downlink component carrier may assign uplink resources on a specific uplink component carrier according to a default or predetermined correspondence between uplink and downlink component carriers. Alternatively, an uplink grant sent on a downlink component carrier may assign uplink resources on any uplink component carrier by means of a component carrier indicated included in signalling message containing the network resource grant.

It will be understood that when user equipment is operable in a multiple component carrier network there could be a radio link failure in one of the downlink component carriers. If user equipment then needs to communicate with the network, it sends a scheduling request. The scheduling request traditionally has comprised a single bit flag. If the network is unaware of a radio link failure in a downlink component carrier it may assign uplink resources to the user equipment using that failed downlink component carrier. In this instance the user equipment would not be able to communicate with the network.

Various methods by which the robustness of communication between user equipment and a base station may be improved are detailed below.

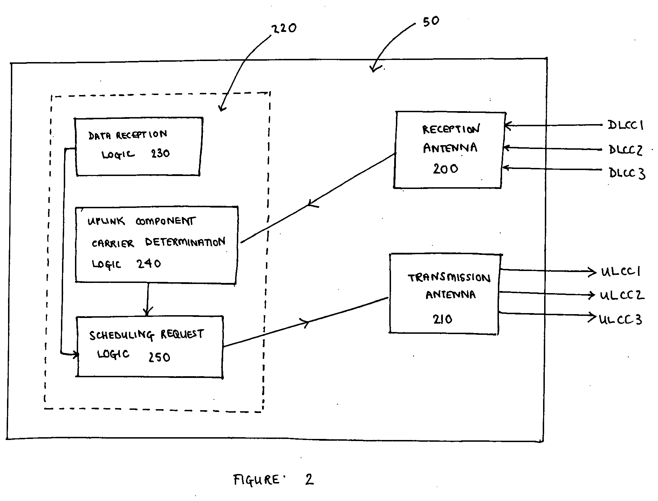

Figure 2 illustrates the main components of user equipment for use in the telecommunications network of Figure 1 employing methods for improving the robustness of communication links between user equipment 50 and a base station 20. User equipment 50 comprises a reception antenna 200, transmission antenna 210 and a user equipment controller 220. The reception antenna 200 is operable to simultaneously receive transmissions on more than one component carrier. In the embodiment shown, the reception antenna is operable to receive data and information transmitted on downlink carriers indicated by DLCC1, DLCC2 and DLCC3. Whilst in this embodiment the reception antenna receives three carrier frequencies, it is generally possible for the reception antenna to receive information on fewer or more than three carriers.

Transmission antenna 210 is operable to simultaneously transmit information from user equipment 50 on a plurality of carriers. In the embodiment shown in Figure 2, the transmission antenna is operable to transmit data and information on uplink carriers indicated by ULCC1, ULCC2 and ULCC3.

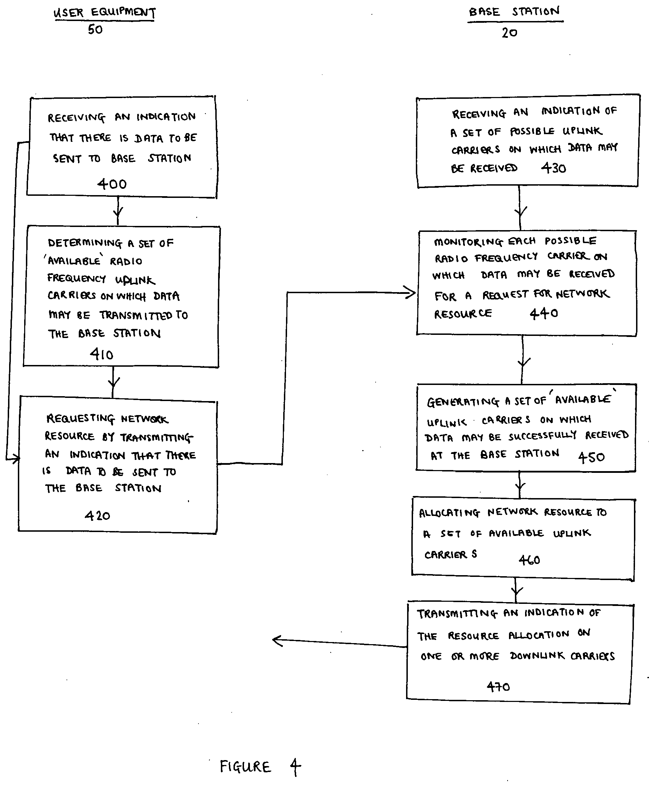

User equipment controller 220 further comprises: data reception logic 230, uplink component carrier determination logic 240, and scheduling request logic 250. The reception antenna 200 is operable to communicate with uplink component carrier determination logic 240. Data reception logic 230 and uplink component carrier determination logic are both operable to communicate with scheduling request logic 250. Scheduling request logic 250 is operable to communicate with transmission antenna 210. Transmission antenna 210 is operable to receive signals and instructions from scheduling request logic 250. The method of operation of the user equipment shown in Figure 2 will be described in more detail in relation to the main processing steps illustrated in Figure 4 below.

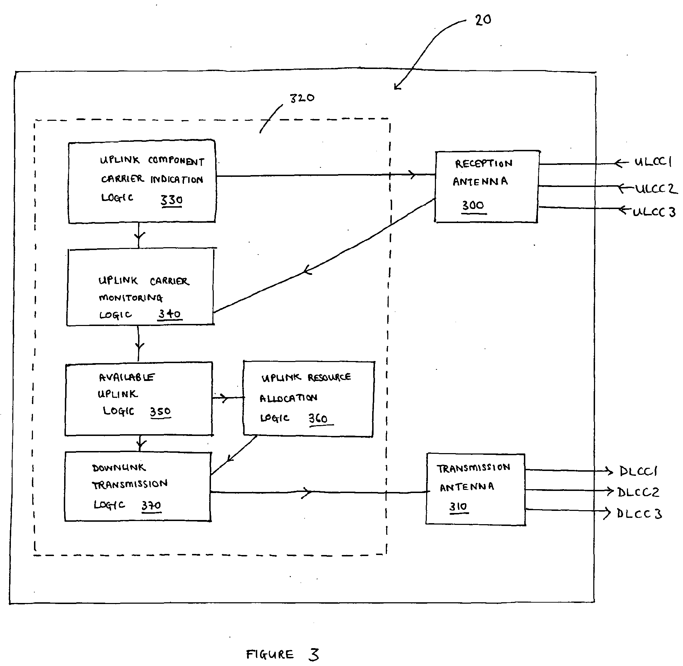

Figure 3 illustrates components of a base station 20 for use in the telecommunications network of Figure 1. Base station 20 of Figure 3 comprises a reception antenna 300, a transmission antenna 310 and a base station controller 320. The base station further comprises a dedicated physical cabling link, which links base station 20 to a radio network controller.

The reception antenna 300 is operable to simultaneously receive signals ULCC1, ULCC2 and ULCC3 from user equipment 50 shown in Figure 2. The transmission antenna 310 is operable to simultaneously transmit signal to user equipment 50 on a plurality of carrier frequencies (in this case DLCC1, DLCC2 and DLCC3).

Base station controller 320 further comprises: uplink component carrier indication logic 330, uplink carrier monitoring logic 340, available uplink logic 350, uplink allocation logic 360, and downlink transmission logic 370. The reception antenna 300 is operable to communicate with uplink communication indication logic and uplink carrier monitoring logic 340. Uplink carrier monitoring logic 340 is operable to communicate with available uplink logic 350. Available uplink logic 350 is operable to communicate with uplink allocation logic 360 and downlink transmission logic 370. The downlink transmission logic 370 is operable to communicate with transmission antenna 310. The operation of base station 20 will be further described in relation to the processing steps shown in Figure 4.

The main processing steps involved in requesting network resource and allocating network resource in accordance with one implementation are illustrated in Figure 4. A method of requesting network resource is initiated when user equipment 50 becomes aware that it has data that needs to be sent to the network. In particular, the user equipment must notify a base station of the existence of that data in order to be allocated network resource to handle that data. User equipment receives an indication internally that there is data to be sent to the base station. That step is illustrated as 400 in Figure 4. Data reception logic (230 in Figure 2) is operable to receive that indication. User equipment 50 then determines a set of available radio frequency uplink carriers on which data may be transmitted a base station. Uplink component carrier determination logic 240 performs that step by communicating with reception antenna 200 to determines which, if any, radio frequency component carriers are being received by user equipment 50. That step is illustrated as step 410 in Figure 4.

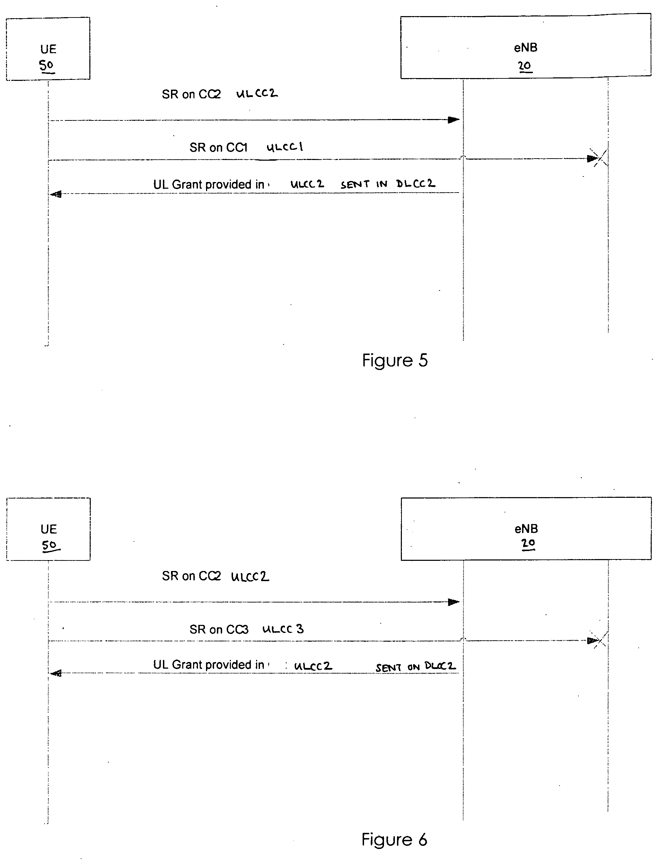

In determining which radio frequency uplink carriers are to be termed "available" various criteria may be applied. Some of the options and criteria by which user equipment may determine which uplink carriers are to be classified as "available" are explained in more detail in relation to Figures 5 to 9.

Once the user equipment controller 220, and more specifically uplink component carrier determination logic 240, has determined which radio frequency uplink carriers are to be deemed "available", user equipment 50 requests network resource by transmitting an indication that there is data to be sent to the base station. The user equipment may typically transmit a single bit indicating that the user equipment has data to be sent to a base station. That single bit is called a "scheduling request". Scheduling request logic 250 communicates with uplink component carrier determination logic 240 and transmission antenna 210 to ensure that a scheduling request is sent to the base station 20 on an "available" uplink carrier. The step of transmitting the indication is indicated as step 420 in Figure 4.

Base station 20 is configured such that uplink component carrier indication logic 330 is aware of which radio frequency carriers data may be received from user equipment 50. at base station 20. That configuration is illustrated as step 430 in Figure 4.

Base station uplink component carrier indication logic 330 communicates with the uplink carrier monitoring logic 340 and the reception antenna 300 such that the base station monitors each possible radio frequency carrier on which data may be received. It monitors those radio frequency carriers for any possible scheduling request for network resource from user equipment 50. The step of monitoring is illustrated as step 440 in Figure 4.

In the event that a scheduling request is received from user equipment 50, base station 20 generates using the available uplink carrier logic 350 a set of "available" radio frequency uplink carriers on which data may be successfully received at the base station if transmitted by user equipment 50. That step of generating available radio frequency uplink carriers is illustrated as step 450 in Figure 4.

It will be appreciated that in determining which radio frequency uplink carriers are "available" various criteria may be applied, and some of those criteria are illustrated in more details in Figures 5 to 9.

Once base station 20 has generated a set of available radio frequency uplink carriers, it is operable to allocate network resource to the set of the available radio frequency carriers such that when that resource allocation is received at the user equipment, user equipment is free to start transmitting the data for example, user data, which it wishes to send to the network. The step of allocating network resource to the set of available radio frequency carriers is illustrated as step 460 in Figure 4 and is carried out by uplink allocation logic 360.

Once network resource has been allocated to user equipment 50 by base station 20, that allocation must be communicated to user equipment 50. The base station 20 therefore operates to transmit an indication of the resource allocation on one or more downlink radio carriers on which the user equipment 50 is configured to receive. The transmission step 470 is carried out by downlink transmission logic 370 in communication with transmission antenna 320. The selection of appropriate downlink carrier may be carried out with a view of the "available" uplink carriers and any correspondence between uplink and downlink carriers.

Figures 5 to 9 are schematic illustrations of possible scenarios using methods in accordance with various embodiments, each employing different criteria to determine "available"

Figure 5 illustrates the scenario in which user equipment 50 has data to send to base station 20. User equipment 50 is configured to transmit on two uplink component carriers available indicated by CC1 and CC2. Since user equipment 50 has data to send to the base station 20 it sends a scheduling request on all configured uplink component carriers. In this embodiment, user equipment 50 sends two scheduling requests one on uplink CC2 and one on uplink CC1. In this embodiment, the set of 'available' carriers is identical to the set of configured carriers.

Base station 20 is aware that user equipment 50 is capable of and configured to transferring information on two component carriers. Base station 20 therefore monitors for receipt of scheduling of a scheduling request on both component carrier 2 and component carrier 1. In the particular embodiment illustrated in Figure 5 the base station is configured such that if it does not receive a scheduling request in an uplink component carrier or, for whatever reason the bases station 20 receives a scheduling request on a carrier having a signal to interference ratio below a certain threshold, it infers that the user equipment 50 is likely to be experiencing a failure in a corresponding downlink component carrier and therefore does not choose to transmit a signalling message, allocating network resource, in that corresponding downlink component carrier.

In the embodiment shown in Figure 5, it can be seen that base station 20 does not receive the scheduling request transmitted on component carrier 1 (ULC1) by user equipment 50. The base station does receive the scheduling request sent on uplink component carrier 2 (ULCC2). As a result, base station 20 transmits a network allocation on downlink component carrier 2 and provides an uplink grant in uplink component carrier 2.

Such a solution assumes reciprocity of the radio channel gain between an uplink component carrier and a corresponding downlink component carrier. This may not always be the case, especially on a short-term basis due to fast fading.

Figure 6 illustrates an alternative implementation in accordance with an alternative embodiment.

In the embodiment shown in Figure 6, the user equipment 50 includes in the scheduling request sent to base station 20 an indication of which downlink component carriers are in (or not in) radio link failure. In one particular embodiment of this implementation as many uplink component carriers are configured for the user equipment as there are downlink component carriers. That is to say, uplink and downlink component carriers are provided in corresponding pairs. In such a case, a scheduling request may be sent on all uplink component carriers which correspond to downlink component carriers that the user equipment has determined are not in radio link failure. As a result, if the base station 20 does not receive a scheduling request on one or more uplink component carriers it infers that the user equipment 50 is experiencing a failure in the corresponding downlink component carrier and does not respond to allocate network resource on a failed downlink or (corresponding uplink component) carrier.

In the embodiment shown in Figure 6, user equipment 50 is capable of transmitting to base station 20 on three possible uplink component carriers marked ULCC1, ULCC2 and ULCC3. Base station 20 is capable of transmitting on three downlink component carriers indicated by DLCC1, DLCC2 and DLCC3. The user equipment 50 detects radio link failure on the downlink corresponding to uplink component carrier 1. As a result, user equipment 50 transmits a scheduling request (when it has user data to send to the network) only on uplink component carrier 2 and uplink component carrier 3.

In the illustrated case, the scheduling request transmitted by the user equipment 50 on uplink component carrier 3 is not received by base station 20. For transmission of the response the base station 20 therefore selects one the downlink component carriers corresponding to the uplink component carrier on which a scheduling request has been received. In this example, the base station sends a grant indicating allocated network resource in downlink component carrier 2 since it has only received a scheduling request on uplink component carrier 2.

It will be appreciated by those skilled in the art that the scheduling request itself may be sent on just one uplink component carrier but that the scheduling request may be encoded such that different parts of the scheduling request may distinguish the failure or otherwise of various downlink component carriers. Such an implementation is suitable for all numbers of uplink and downlink component carriers including cases where the number of uplink component carriers is lower than the number of downlink component carriers. In one example of such an implementation, a scheduling request may be modified to include a signal indicating one or more available (ie: not in radio link failure) downlink component carriers. It will be understood that an extended scheduling request may, for example, comprise a bitmap in which each bit indicates the availability of one of the configured downlink component carriers.

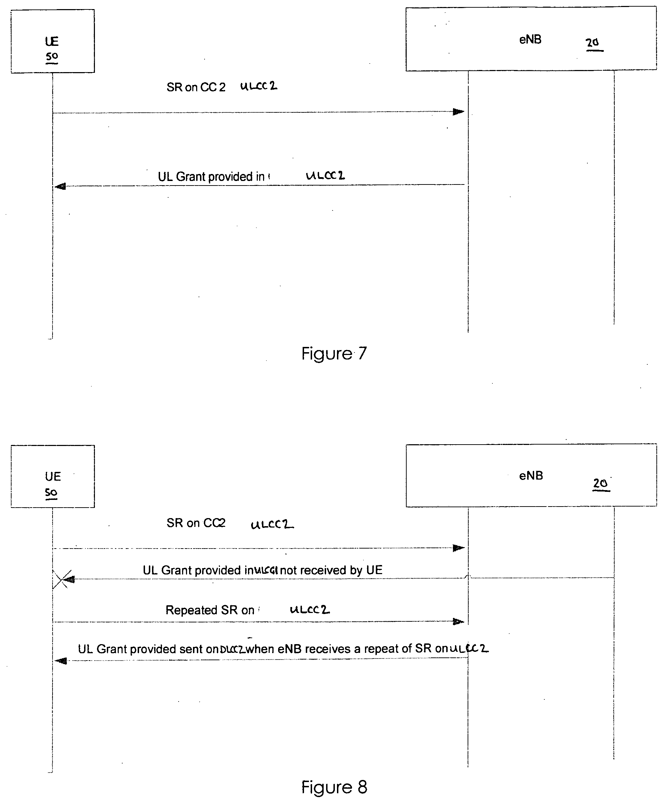

Figure 7 is a schematic illustration of a further possible scenario using methods in accordance with an alternative implementation. The scheduling request transmitted by user equipment 50 to base station 20 may not be configured such that it is capable of signalling information relating to more than one downlink component carrier. In such a situation, it is possible to configure base station 20 and user equipment 50 such that the network assigns grants and thus network resource on a downlink component carrier corresponding to an uplink component carrier in which the user equipment sent a scheduling request. User equipment 50 may select a single downlink component carrier on which to receive a response and thus network resource for the corresponding uplink carrier. The user equipment thus picks the "best" available downlink component carrier.

This scenario is illustrated in Figure 7 in which user equipment 50 only sends a scheduling request on uplink component carrier 2 which is not under radio link failure and has been determined to have the highest signal to noise ratio on a corresponding downlink component carrier. In response to a received schedule request, base station 20 sends an uplink grant on corresponding downlink component carrier 2.

Such a solution may be unnecessarily restrictive to the network performance as a whole since this rule must be followed for all scheduling requests not just those user equipment which are experiencing radio link failure. In cases where there is no radio link failure, the network is therefore denied the possibility to choose an alternative downlink component carrier on which to send the indication of resource allocation.

Figure 8 is a schematic illustration of a further possible implementation using methods in accordance with an alternative embodiment. In the scenario illustrated in Figure 8 user equipment 50 is configured to be able to transmit on two uplink component carriers ULCC1 and ULCC2. Base station 20 is configured to receive transmissions made by user equipment 50 on uplink component carrier 1 and component carrier 2.

If user equipment 50 has data to send to the network, it transmits a scheduling request. If no response is received from base station 20 to that scheduling request it is possible to configure user equipment such that it repeats transmission of the scheduling request. Repetition of transmission of the scheduling request by the user equipment may be interpreted by base station 20 as a possible failure in the downlink component carrier on which it first responded. In such an implementation, in response to a repeated scheduling request, the base station 20 may be configured to transmit a grant to the user equipment using a different downlink component carrier from the one used for the first response.

The base station 50 may choose any downlink component carrier for transmission of the signalling message, allocating network resource, in response to the first received scheduling request, but for a repeated scheduling request the base station 20 is operable to ensure that the second transmitted signalling message, allocating network resource, is made on the downlink component carrier corresponding to the uplink component carrier on which the repeated scheduling request was received.

Such an implementation is illustrated in Figure 8. User equipment 50 sends a scheduling request on uplink component carrier 2 which is received by a base station 20. Base station 20 issues a network allocation and provides an uplink grant on downlink component carrier 1. That grant is not received by user equipment 50 and thus user equipment 50 repeats the scheduling request again on uplink component carrier 2. The base station 20 receives the repeated scheduling request on uplink component carrier 2 and in the repeated instance responds on downlink component carrier 2. The base station is configured to provide an uplink grant on component carrier 2, in the case of a repeated scheduling request.

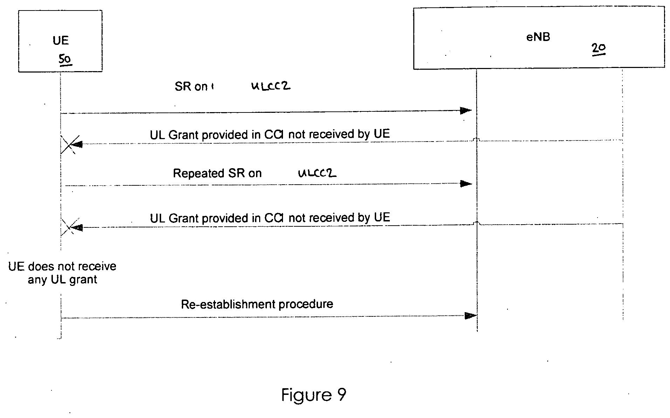

Figure 9 illustrates a further implementation using methods in accordance with an alternative embodiment. In this instance user equipment 50 in configured to repeat scheduling requests if no response is received form the base station 20 within a predetermined time period. The user equipment and base station may be configured such that if no response is received from the base station 20 within a certain number of repetitions of the original transmitted scheduling request, user equipment is configured to issue a request for radio re-establishment to the network as a whole. That is to say, user equipment 50 invokes a re-establishment procedure when it does not receive any uplink grant after a certain number of repeated scheduling requests.

As illustrated in Figure 9, user equipment 50 has selected transmission of a schedule request on uplink component carrier 2. User equipment 50 repeats the scheduling request on component carrier 2. That scheduling request is received by base station 20. In response, base station 20 has provided grant in component carrier 1 but that grant has not been received by the user equipment, nor is it received even after several schedule request repetitions. After a predetermined number of repetitions, user equipment 50 transmits (on any uplink component carrier) a request for radio link re-establishment to the network as a whole.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of requesting network resource in a multiple component carrier wireless telecommunications network, said multiple component carrier wireless telecommunications network comprising a network node (20) and user equipment (50), each operable to simultaneously transmit and receive signals on more than one radio frequency carrier within a geographical region of said telecommunications network,
said method comprising the steps of:
receiving (400), at the user equipment, an indication that there is data to be sent to a network node;
determining (410), at the user equipment, a set of available radio frequency carriers on which data may be transmitted to said network node; said step of determining a set of available radio frequency carriers on which data may be transmitted to said network node comprising the steps of:
monitoring, at the user equipment, a measurable characteristic indicative of radio propagation characteristics or failure of each radio frequency carrier on which data may be received from said network node;
determining, at the user equipment, which of those radio frequency carriers on which data may be received from said network node has a measurable characteristic indicative of radio propagation characteristics or failure past a predetermined threshold value;
correlating, at the user equipment, those radio frequency carriers on which data may be received from said network node determined to have said measurable characteristic past said predetermined threshold value with a corresponding radio frequency carrier on which data may be transmitted to said network node, and allocating those correlated radio frequency carriers on which data may be transmitted to said network node to said set of available radio frequency carriers; and
requesting (420) network resource by transmitting to said network node an indication that there is data to be sent to said network node on a carrier from the set of determined available carriers.

2. A method of requesting network resource according to claim 1, wherein said step of requesting network resource by transmitting an indication that there is data to be sent to said network node (20), further comprises a step of:
i) calculating which of those radio frequency carriers on which data may be received from said network node has a measurable characteristic indicative of radio propagation characteristics or failure past a predetermined threshold value by the greatest amount;
ii) correlating said radio frequency carrier on which data may be received from said network node determined to have said measurable characteristic indicative of radio propagation characteristics or failure past said predetermined threshold value by the greatest amount with a corresponding radio frequency carrier on which data may be transmitted to said network node, and transmitting said indication to said network node on that carrier.

3. A method of requesting network resource according to any preceding claim, wherein said step of requesting network resource comprises the step of transmitting an indication that there is data to be sent to said network node on each carrier in the set of determined available carriers.

4. A method of requesting network resource according to any preceding claim, wherein said indication that there is data to be sent to said network node comprises an indication of those radio frequency carriers on which data may be transmitted to said network node determined to be in said set of available carriers.

5. A method of requesting network resource according to any preceding claim, further comprising the steps of:
monitoring, at the user equipment, for a response to said request for network resource;
if no response is detected within a first predetermined time period, re-requesting network resource by re-transmitting said indication that there is data to be sent to said network node on a carrier from the set of determined available carriers.

6. A method of requesting network resource according to claim 5, wherein after a predetermined number of re-transmissions the method further comprises the step of initiating, at the user equipment, a radio link re-esfablishment procedure by transmitting a request for radio link re-establishment on a radio frequency carrier on which data may be transmitted to a network node.

7. A computer program product operable, when executed on a computer, to perform the method steps of any of claims 1 to 6.

8. User equipment (50) operable to request network resource in a multiple component carrier wireless telecommunications network,
said multiple component carrier wireless telecommunications network comprising a network node (20) and user equipment (50), each operable to simultaneously transmit and receive signals on more than one radio frequency carrier within a sector of said telecommunications network,
said user equipment comprising:
data reception logic (230) operable to receive an indication that there is data to be sent to a network node;
uplink carrier determination logic (240) operable to determine a set of available radio frequency carriers on which data may be transmitted to said network node monitoring logic, operable to monitoring a measurable characteristic of each radio frequency carrier on which data may be received from the network node;
determination logic, operable to determine which of those radio frequency carriers on which data may be received from said network node has a measurable characteristic past a predetermined threshold value; and
correlation logic, operable to correlate those radio frequency carriers on which data may be received from the network node determined to have a measurable characteristic past said predetermined threshold value with a corresponding radio frequency carrier on which data may be transmitted to the network node, and allocation logic, operable to allocate those correlated radio frequency carriers on which data may be transmitted to the network node to the set of available radio frequency carriers;
scheduling request logic (250) operable to request network resource by transmitting to said network node an indication that there is data to be sent to said network node on a carrier from the set of determined available carriers.

## Patentansprüche

1. Verfahren zum Anfordern einer Netzwerkressource in einem drahtlosen Mehrkomponententräger-Telekommunikationssystem,
wobei besagtes drahtlose Mehrkomponententräger-Telekommunikationssystem einen Netzwerkknoten (20) und Teilnehmergeräte (50) umfasst, wobei jedes betreibbar ist zum gleichzeitigen Übertragen und Empfangen von Signalen auf mehr als einem Funkfrequenzträger innerhalb eines geographischen Bereichs von besagtem Telekommunikationsnetzwerk,
wobei besagtes Verfahren die folgenden Schritte umfasst:
Empfangen (400) am Teilnehmergerät einer Anzeige, dass es Daten gibt, die an einen Netzwerkknoten gesendet werden müssen;
Bestimmen (410) am Teilnehmergerät eines Satzes von verfügbaren Funkfrequenzträgern, auf denen Daten zu besagtem Netzwerkknoten übertragen werden können; wobei der Schritt des Bestimmens eines Satzes von verfügbaren Funkfrequenzträgern, auf denen Daten auf besagten Netzwerkknoten übertragen werden können, die folgenden Schritte umfasst:
Überwachen am Teilnehmergerät einer messbaren Eigenschaft, die indikativ ist für die Funkausbreitungseigenschaften oder den Fehler eines jeden Funkfrequenzträgers, auf dem Daten von besagtem Netzwerkknoten empfangen werden können;
Bestimmen am Teilnehmergerät, welcher der Funkfrequenzträger, auf denen Daten von besagtem Netzwerkknoten empfangen werden können, eine messbare Eigenschaft aufweist, die indikativ ist für die Funkausbreitungseigenschaften oder den Fehler nach einem vorbestimmten Schwellenwert;
Korrelieren am Teilnehmergerät derjenigen Funkfrequenzträger, auf denen Daten von besagtem Netzwerkknoten empfangen werden können und die bestimmt worden sind, besagte messbare Eigenschaft nach besagtem vorbestimmten Schwellenwert aufzuweisen, mit einem entsprechenden Funkfrequenzträger, auf dem Daten auf besagten Netzwerkknoten übertragen werden können, und Zuteilen dieser korrelierten Funkfrequenzträger, auf denen Daten auf besagten Netzwerkknoten übertragen werden können, zu besagtem Satz von verfügbaren Funkfrequenzträgern; und
Anfordern (420) einer Netzwerkressource zum Übertragen auf besagten Netzwerkknoten einer Anzeige, dass Daten vorhanden sind, die zu besagtem Netzwerkknoten auf einem Träger von besagtem Satz von bestimmten verfügbaren Trägem gesendet werden müssen.

2. Verfahren zum Anfordern einer Netzwerkressource nach Anspruch 1, wobei besagter Schritt des Anforderns einer Netzwerkressource durch Übertragen einer Anzeige, dass Daten vorhanden sind, die zu besagtem Netzwerkknoten (20) gesendet werden müssen, weiterhin die folgenden Schritte umfasst:
i) Berechnen, welcher dieser Funkfrequenzträger, auf denen Daten von besagtem Netzwerkknoten empfangen werden können, eine messbare Eigenschaft aufweist, die indikativ ist für die Funkausbreitungseigenschaften oder den Fehler nach einem vorbestimmten Schwellenwert mittels des größten Betrags;
ii) Korrelieren besagten Funkfrequenzträgers, auf dem Daten von besagtem Netzwerkknoten empfangen werden können und der bestimmt worden ist, besagte messbare Eigenschaft aufzuweisen, die indikativ ist für die Funkausbreitungseigenschaften oder den Fehler nach einem vorbestimmten Schwellenwert mittels des größten Betrags, mit einem entsprechenden Funkfrequenzträger, auf dem Daten auf besagten Netzwerkknoten übertragen werden können, und Übertragen besagter Anzeige auf besagten Netzwerkknoten auf diesem Träger.

3. Verfahren zum Anfordern einer Netzwerkressource nach einem beliebigen der vorhergehenden Ansprüche, wobei besagter Schritt des Anforderns einer Netzwerkressource den Schritt des Übertragens einer Anzeige umfasst, dass es Daten gibt, die an besagten Netzwerkknoten auf jedem Träger im Satz von bestimmten verfügbaren Träger gesendet werden müssen.

4. Verfahren zum Anfordern einer Netzwerkressource nach einem beliebigen der vorhergehenden Ansprüche, wobei besagte Anzeige, dass Daten vorhanden sind, die an besagten Netzwerkknoten gesendet werden müssen, eine Anzeige derjenigen Funkfrequenzträger umfasst, auf denen Daten auf besagten Netzwerkknoten übertragen werden können und die bestimmt worden sind, zu besagtem Satz verfügbarer Träger zu gehören.

5. Verfahren zum Anfordern einer Netzwerkressource nach einem beliebigen der vorhergehenden Ansprüche, weiterhin die folgenden Schritte umfassend:
Überwachen am Teilnehmergerät einer Antwort auf besagte Anforderung einer Netzwerkressource;
wenn keine Antwort innerhalb eines ersten bestimmten Zeitraums erkannt wird, Anfordern einer Netzwerkressource mittels erneutem Übertragen besagter Anzeige, dass Daten vorhanden sind, die an besagten Netzwerkknoten auf einem Träger aus dem Satz der bestimmten verfügbaren Träger gesendet werden müssen.

6. Verfahren zum Anfordern einer Netzwerkressource nach Anspruch 5, wobei nach einer vorbestimmten Anzahl von erneuten Übertragungen das Verfahren weiterhin umfasst den Schritt des Initiierens, am Teilnehmergerät, eines Funkverbindungs-Wiederherstellungsverfahrens durch Übertragen einer Anforderung einer Funkverbindungs-Wiederherstellung an einem Funkfrequenzträger, auf dem Daten auf besagten Netzwerkknoten übertragen werden müssen.

7. Computerprogramm-Produkt, betreibbar, um bei dessen Ausführung auf einem Computer die Verfahrensschritte gemäß einem beliebigen der Ansprüche 1 bis 6 durchzuführen.

8. Teilnehmergerät (50), betreibbar zum Anfordern einer Netzwerkressource in einem drahtlosen Mehrkomponententräger- Telekommunikationssystem,
wobei besagtes drahtloses Mehrkomponententräger-Telekommunikationssystem einen Netzwerkknoten (20) und Teilnehmergeräte (50) umfasst, wobei jedes betreibbar ist zum gleichzeitigen Übertragen und Empfangen von Signalen auf mehr als einem Funkfrequenzträger innerhalb eines Sektors von besagtem Telekommunikationsnetzwerk, wobei besagtes Teilnehmergerät umfasst:
eine Datenempfangslogik (230), die betreibbar ist zum Empfangen einer Anzeige, dass es Daten gibt, die an einen Netzwerkknoten gesendet werden müssen;
eine Uplink-Trägerbestimmungslogik (240), die betreibbar ist zum Bestimmen eines Satzes von verfügbaren Funkfrequenzträgern, auf denen Daten auf besagte Netzwerkknoten-Überwachungslogik übertragen werden können, die betreibbar ist zum Überwachen einer messbaren Eigenschaft eines jeden Funkfrequenzträgers, auf denen Daten vom Netzwerkknoten empfangen werden können;
eine Bestimmungslogik, die betreibbar ist zum Bestimmen, welcher dieser Funkfrequenzträger, auf denen Daten von besagtem Netzwerkknoten empfangen werden können, eine messbare Eigenschaft nach einem vorbestimmten Schwellenwert aufweist; und
eine Korrelierungslogik, die betreibbar ist zum Korrelieren derjenigen Funkfrequenzträger, auf denen Daten vom Netzwerkknoten empfangen werden können und die bestimmt worden sind, eine messbare Eigenschaft nach besagtem vorbestimmten Schwellenwert aufzuweisen, mit einem entsprechenden Funkfrequenzträger, auf dem Daten auf den Netzwerkknoten übertragen werden können, und eine Zuweisungslogik, die betreibbar ist zum Zuweisen derjenigen korrelierten Funkfrequenzträger, auf denen Daten auf den Netzwerkknoten übertragen werden können, zum Satz von verfügbaren Funkfrequenzträgern;
eine Planungsanforderungslogik (250), die betreibbar ist zum Anfordern einer Netzwerkressource durch Übertragen auf besagten Netzwerkknoten einer Anzeige, dass Daten vorhanden sind, die an besagten Netzwerkknoten gesendet werden müssen, auf einem Träger vom Satz der bestimmten verfügbaren Träger.

## Revendications

1. Procédé de demande d'une ressource de réseau dans un réseau de télécommunication sans fil de multiples porteuses composantes,
ledit réseau de télécommunication sans fil de multiples porteuses composantes comprenant un noeud de réseau (20) et un équipement utilisateur (50), permettant chacun de transmettre et de recevoir simultanément des signaux sur plus d'une porteuse radiofréquence dans une région géographique dudit réseau de télécommunication,
ledit procédé comprenant les étapes suivantes :
recevoir (400), au niveau de l'équipement utilisateur, une indication selon laquelle il existe des données à envoyer à un noeud de réseau ;
déterminer (410), au niveau de l'équipement utilisateur, un ensemble de porteuses radiofréquences disponibles sur lesquelles des données peuvent être transmises audit noeud de réseau ; ladite étape de détermination d'un ensemble de porteuses radiofréquences disponibles sur lesquelles des données peuvent être transmises audit noeud de réseau comprenant les étapes suivantes :
surveiller, au niveau de l'équipement utilisateur, une caractéristique mesurable indiquant des caractéristiques de propagation radio ou une défaillance de chaque porteuse radiofréquence sur laquelle des données peuvent provenir dudit noeud de réseau ;
déterminer, au niveau de l'équipement utilisateur, laquelle de ces porteuses radiofréquences, sur lesquelles des données peuvent provenir dudit noeud de réseau, a une caractéristique mesurable indiquant des caractéristiques de propagation radio ou une défaillance dépassant une valeur de seuil prédéterminée ;
mettre en corrélation, au niveau de l'équipement utilisateur, ces porteuses radiofréquences sur lesquelles des données peuvent provenir dudit noeud de réseau déterminées comme ayant ladite caractéristique mesurable dépassant ladite valeur de seuil prédéterminée avec une porteuse radiofréquence correspondante sur laquelle des données peuvent être transmises audit noeud de réseau, et attribuer ces porteuses radiofréquences corrélées sur lesquelles des données peuvent être transmises audit noeud de réseau audit ensemble de porteuses radiofréquences disponibles ; et
demander (420) une ressource de réseau en transmettant audit noeud de réseau une indication selon laquelle il existe des données à envoyer audit noeud de réseau sur une porteuse parmi l'ensemble de porteuses disponibles déterminées.

2. Procédé de demande d'une ressource de réseau selon la revendication 1, dans lequel ladite étape de demande d'une ressource de réseau en transmettant une indication selon laquelle il existe des données à envoyer audit noeud de réseau (20), comprend en outre les étapes suivantes :
i) calculer laquelle de ces porteuses radiofréquences, sur lesquelles des données peuvent provenir dudit noeud de réseau, a une caractéristique mesurable indiquant des caractéristiques de propagation radio ou une défaillance dépassant une valeur de seuil prédéterminée par la quantité maximum ;
ii) mettre en corrélation ladite porteuse radiofréquence sur laquelle des données peuvent provenir dudit noeud de réseau déterminée comme ayant ladite caractéristique mesurable indiquant des caractéristiques de propagation radio ou une défaillance dépassant une valeur de seuil prédéterminée par la quantité maximum, avec une porteuse radiofréquence correspondante sur laquelle des données peuvent être transmises audit noeud de réseau, et transmettre ladite indication audit noeud de réseau sur cette porteuse.

3. Procédé de demande d'une ressource de réseau selon l'une quelconque des revendications précédentes, dans lequel ladite étape de demande d'une ressource de réseau comprend l'étape de transmission d'une indication selon laquelle il existe des données à envoyer audit noeud de réseau sur chaque porteuse dans l'ensemble de porteuses disponibles déterminées.

4. Procédé de demande d'une ressource de réseau selon l'une quelconque des revendications précédentes, dans lequel ladite indication selon laquelle il existe des données à envoyer audit noeud de réseau comprend une indication de ces porteuses radiofréquences sur lesquelles des données peuvent être transmises audit noeud de réseau déterminées comme étant dans ledit ensemble de porteuses disponibles.

5. Procédé de demande d'une ressource de réseau selon l'une quelconque des revendications précédentes, comprenant en outre les étapes suivantes :
surveiller, au niveau de l'équipement utilisateur, une réponse à ladite demande d'une ressource de réseau ;
si aucune réponse n'est détectée au cours d'une première période prédéterminée, redemander une ressource de réseau en retransmettant ladite indication selon laquelle il existe des données à envoyer audit noeud de réseau sur une porteuse parmi l'ensemble de porteuses disponibles déterminées.

6. Procédé de demande d'une ressource de réseau selon la revendication 5, dans lequel après un nombre prédéterminé de retransmissions, le procédé comprend en outre l'étape d'initiation, au niveau de l'équipement utilisateur, d'une procédure de rétablissement de liaison radio en transmettant une demande de rétablissement de liaison radio sur une porteuse radiofréquence sur laquelle des données peuvent être transmises à un noeud de réseau.

7. Produit de programme informatique permettant, lorsqu'il est exécuté sur un ordinateur, d'exécuter les étapes du procédé selon l'une quelconque des revendications 1 à 6.

8. Équipement utilisateur (50) permettant de demander une ressource de réseau dans un réseau de télécommunication sans fil de multiples porteuses composantes,
ledit réseau de télécommunication sans fil de multiples porteuses composantes comprenant un noeud de réseau (20) et un équipement utilisateur (50), permettant chacun de transmettre et de recevoir simultanément des signaux sur plus d'une porteuse radiofréquence dans un secteur dudit réseau de télécommunication,
ledit équipement utilisateur comprenant :
une logique de réception de données (230) permettant de recevoir une indication selon laquelle il existe des données à envoyer à un noeud de réseau ;
une logique de détermination de porteuse en liaison montante (240) permettant de déterminer un ensemble de porteuses radiofréquences disponibles sur lesquelles des données peuvent être transmises à ladite logique de surveillance de noeud de réseau,
permettant de surveiller une caractéristique mesurable de chaque porteuse radiofréquence sur laquelle des données peuvent provenir du noeud de réseau ;
une logique de détermination, permettant de déterminer laquelle de ces porteuses radiofréquences, sur lesquelles des données peuvent provenir dudit noeud de réseau, a une caractéristique mesurable dépassant une valeur de seuil prédéterminée ; et
une logique de corrélation, permettant de mettre en corrélation ces porteuses radiofréquences, sur lesquelles des données peuvent provenir du noeud de réseau déterminées comme ayant une caractéristique mesurable dépassant ladite valeur de seuil prédéterminée, avec une porteuse radiofréquence correspondante sur laquelle des données peuvent être transmises au noeud de réseau, et une logique d'attribution, permettant d'attribuer ces porteuses radiofréquences corrélées sur lesquelles des données peuvent être transmises au noeud de réseau à l'ensemble de porteuses radiofréquences disponibles ;
une logique de demande de planification (250) permettant de demander une ressource de réseau en transmettant audit noeud de réseau une indication selon laquelle il existe des données à envoyer audit noeud de réseau sur une porteuse parmi l'ensemble de porteuses disponibles déterminées.
